# EUROPÄISCHE PATENTSCHRIFT

(11) **EP 1 281 247 B1**
(45) Veröffentlichungstag und Bekanntmachung des Hinweises auf die Patenterteilung: **22.03.2006**
(21) Anmeldenummer: 01943309.3
(22) Anmeldetag: 02.05.2001
(51) Int. Cl.: H04B 7/185

(54) **SENDE-UND EMPFANGSEINRICHTUNG UND VERFAHREN ZUR SYNCHRONISATION EINER EMPFANGSEINRICHTUNG**
TRANSMITTER AND RECEIVER DEVICE AND METHOD FOR SYNCHRONIZING A RECEIVER INSTALLATION
DISPOSITIF D'EMISSION ET DE RECEPTION ET PROCEDE DE SYNCHRONISATION D'UN DISPOSITIF D'EMISSION

(30) Priorität: 11.05.2000 DE 10023007
(43) Veröffentlichungstag der Anmeldung: 05.02.2003
(73) Patentinhaber: Rohde & Schwarz GmbH & Co. KG, 81671 München (DE)
(72) Erfinder: LIPP, Friedrich, A-5322 Hof bei Salzburg (AT); EPPINGER, Rolf, 81735 München (DE)
(74) Vertreter: Körfer, Thomas
(86) Internationale Anmeldenummer: PCT/EP2001/004919
(87) Internationale Veröffentlichungsnummer: WO 2001/086835

(56) Entgegenhaltungen:
- AKOS D M ET AL: "RECEIVER MEASURED TIME IN THE VDL MODE 4 SYSTEM" IEEE 2000 POSITION LOCATION AND NAVIGATION SYMPOSIUM. (PLANS 2000). SAN DIEGO, CA, MARCH 13-16, 2000, POSITION LOCATION AND NAVIGATION SYMPOSIUM, NEW YORK, NY: IEEE, US, 13. März 2000 (2000-03-13), Seiten 309-316, XP000991428 ISBN: 0-7803-5873-2

## Beschreibung

Die Erfindung betrifft eine Sende- und Empfangsvorrichtung für ein zelluläres Funknetz, insbesondere für ein Funknetz für den VDL-(VHF-Digital-Link)-Flugfunk. Solche Flugfunk-Sende- und Empfangsvorrichtungen werden für die digitale Sprachübertragung und Übertragung weiterer digitaler Daten zwischen einer Bodenstation und in Flugzeugen befindlichen mobilen Stationen verwendet. Die Erfindung betrifft ferner ein Verfahren zur Synchronisation der Empfangsvorrichtung.

Bei Sende- und Empfangsvorrichtung für den VDL-Flugfunk befindet sich die Empfangseinrichtung aus Gründen der Entkopplung in einiger Entfernung von der Sendeeinrichtung und ist über eine drahtgebundene Leitung mit der Sendeeinrichtung verbunden. Dabei besteht das Problem, daß die Sendeeinrichtung und die Empfangseinrichtung synchronisiert werden müssen. Dies kann grundsätzlich dadurch geschehen, daß sowohl am Standort der Sendeeinrichtung als auch am Standort der Empfangseinrichtung ein Zeitnorinalempfänger vorgesehen ist. Die Bereitstellung eines zweiten Zeitnormalempfängers ist jedoch unwirtschaftlich.

Die Druckschrift AKOS D M ET AL: "RECEIVER MEASURED TIME IN THE VDL MODE 4 SYSTEM" IEEE 2000 POSITION LOCATION AND NAVIGATION SYMPOSIUM. (PLANS 2000). SAN DIEGO, CA, MARCH 13-16, 2000, POSITION LOCATION AND NAVIGATION SYMPOSIUM, NEW YORK, NY: IEEE, US, 13. März 2000, Seiten 309-316, ISBN: 0-7803-5873-2 beschreibt in ein Verfahren zur Bereitstellung eines Back-up Systems, um im Falle eines Ausfalls der primären Zeitquelle in einer Userstation innerhalb eines VDL Mode 4 Systems weiterhin eine Synchronisierung zu der globalen Zeitbasis aufrecht erhalten zu können. Dieses Verfahren zur Aufrechterhaltung der Synchronzeit basiert auf dem Konzept der 'Receiver Measured Time' (RMT). Bei diesem Konzept wird nach Auswertung der 'time of arrival' (TOA) des empfangenen Signals zusammen mit dem Wissen um die Position der anderen sendenden Station der Zeitpunkt des Absendens der Nachricht ermittelt, wodurch das STDMA Protokollzeitraster ermittelt werden kann, da die Sendung der Nachrichtenrahmen zu vorgeschriebenen Zeitpunkten innerhalb des Rasters geschieht.

Es ist die Aufgabe der vorliegenden Erfindung, eine Sende- und Empfangsvorrichtung sowie ein Verfahren zur Synchronisation einer Sende- und Empfangsevorrichtung anzugeben, welche bzw. welches eine einfache Synchronisation zwischen der Empfangseinrichtung und der Sendeeinrichtung ermöglicht.

Die Aufgabe wird bezüglich der Sende- und Empfangsvorrichtung durch die Merkmale des Anspruchs 1 und bezüglich des Verfahrens durch die Merkmale des Anspruchs 9 gelöst .

Der Erfindung liegt die Erkenntnis zugrunde, daß es ausreichend ist, nur am Standort der Sendevorrichtung einen Zeitnormalempfänger vorzusehen. Die Synchronisation der Empfangseinrichtung auf die Sendeeinrichtung erfolgt durch Mithören des Sendesignals der sich in der gleichen Zelle des zellulären Funknetzes befindlichen Sendeeinrichtung.

Die Ansprüche 2 bis 10 betreffen vorteilhafte Weiterbildungen der erfindungsgemäßen Sende- und Empfangsvorrichtung. Die Ansprüche 12 und 13 betreffen vorteilhafte Weiterbildungen des erfindungsgemäßen Verfahrens .

Das Synchronisationssignal wird aus dem mitgehörten Sendesignal vorzugsweise nur dann erzeugt, wenn der zugehörige Sendeblock von einer vorbestimmten Trainingssequenz eingeleitet wird. Eine Übernahme der Zeit der ersten Zeitsteuerung (background timer) in eine zweite Zeitsteuerung (forground timer) erfolgt vorzugsweise nur dann, wenn zusätzlich zumindest ein Bit einer der Trainingssequenz nachfolgenden Systeminformation einen vorbestimmten Wert annimmt. Zusätzlich zu der Koinzidenz zwischen Trainingssequenz und Systeminformation kann die Feldstärke und/oder die Fehlerrate des mitgehörten Signals ausgewertet werden. Wenn die Feldstärke zu gering ist, kann davon ausgegangen werden, daß das mitgehörte Signal nicht aus der gleichen Zelle, sondern aus einer Nachbarzelle stammt. Wenn das mitgehörte Signal nicht fehlerfrei bzw. wenn die Fehlerrate zu hoch ist, wird das mitgehörte Signal ebenfalls verworfen.

Dabei kann das durch Mithören des Sendesignals erzeugte Synchronisationssignal zunächst zum Setzen der Zeit einer Hintergrund-Zeitsteuereinrichtung (background timer) herangezogen werden. Die Zeit der Hintergrund-Zeitsteuereinrichtung wird nur dann in eine Vordergrund-Zeitsteuereinrichtung (forground timer) übernommen, wenn die vorstehend beschriebenen Kriterien erfüllt sind. Zusätzlich kann überprüft werden, ob der Zeitunterschied zwischen der Hintergrund-Zeitsteuereinrichtung und der Vordergrund-Zeitsteuereinrichtung kleiner als ein maximaler Zeitunterschied ist, der aufgrund der möglichen Drift des die beiden Zeitsteuereinrichtungen ansteuernden Oszillators (Taktgenerators) maximal erwartet wird. Da diese Drift davon abhängt, wann die Zeit der Vordergrund-Zeitsteuereinrichtung durch Übernahme der Zeit der Hintergrund-Zeitsteuereinrichtung das letzte Mal aktualisiert wurde, ist dieser maximal zulässige Zeitunterschied zeitabhängig.

Ein Ausführungsbeispiel der Erfindung wird nachfolgend unter Bezugnahme auf die Zeichnung näher beschrieben. In der Zeichnung zeigen:
- Fig. 1: ein Blockschaltbild einer Sende- und Empfangsvorrichtung für VDL-Flugfunk;
- Fig. 2: ein detaillierteres Blockschaltbild der Empfangseinrichtung;
- Fig. 3: ein Schema zur Erläuterung der Sende- und Empfangs-Blöcke (Bursts);
- Fig. 4A-4C: ein Schema zur Erläuterung der Datenstruktur des Sendesignals und der Erzeugung eines Steuersignals;
- Fig. 5: ein Schema zur Erläuterung der Struktur der Systeminformation des Sendesignals; und
- Fig. 6: ein Schema zur Erläuterung der maximal zulässigen Zeitdifferenz.

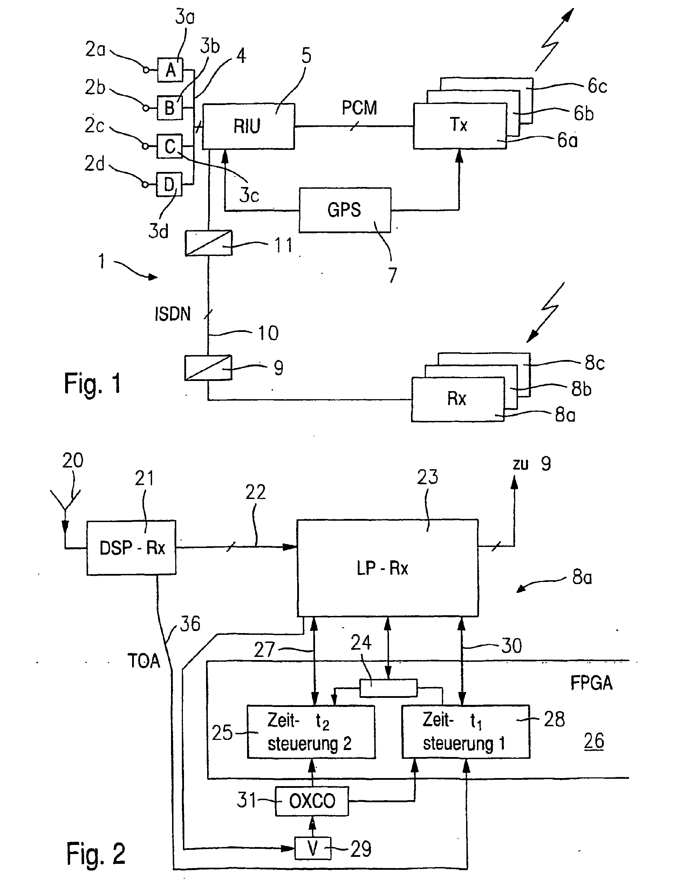

Fig. 1 zeigt ein schematisches Blockschaltbild einer Sende- und Empfangsvorrichtung 1, die insbesondere für VDL-(VHF-Digital-Link)-Flugfunk eingesetzt werden kann. Die einzelnen Operators, beispielsweise Fluglotsen, sind mit den Sprachdateneingängen bzw. Sprachdatenausgängen 2a, 2b, 2c, 2d, beispielsweise über nicht dargestellte Mikrophone und Kopfhörer und nicht dargestellte Verstärker oder Analog/Digital-Wandler verbunden, so daß die Sprachdateneingänge 2a - 2d digitale Sprachdatenpakete empfangen. Im dargestellten Ausführungsbeispiel sind insgesamt vier Sprachdateneingänge 2a - 2d vorhanden, die vier Kanäle A, B, C und D (Slots) zugeordnet sind. Jeder Kanal A, B, C, D verfügt über einen Vocoder 3a, 3b, 3c bzw. 3d. In den Vocodern 3a - 3d werden die Sprachdaten komprimiert und redundante Daten beseitigt. Die komprimierten Datenpakete werden über einen Datenbus 4 einer zentralen Steuereinheit 5 zugeführt, die allgemein als RIU (Radio Interface Unit) bezeichnet wird. Die Steuereinheit RIU 5 ist über einen PCM (Pulse Code Modulation)-Datenbus mit mehreren Sendeeinrichtungen Tx 6a, 6b, 6c verbunden, die zu festgelegten Zeiten in bestimmter Weise konfigurierte Sendeblöcke (Bursts) aussenden. Ein Zeitnormalempfänger 7, beispielsweise ein Empfänger für das GPS-System, ist sowohl mit der Steuereinrichtung RIU 5 als auch mit den Sendeeinrichtungen 6a - 6c verbunden.

Mehrere Empfangseinrichtungen Rx 8a, 8b, 8c befinden sich zur Entkopplung in einiger Entfernung von den Sendeeinrichtungen 6a - 6c und sind über einen Datenwandler 9 mit einer Datenleitung 10 verbunden, die wiederum über einen Datenwandler 11 mit der Steuereinheit RIU 5 in Verbindung steht. Bei der Datenleitung 10 kann es sich beispielsweise um mehrere ISDN-Telefonleitungen handeln.

Bei dem VDL-Flugfunknetz handelt es sich um ein zelluläres Funknetz, wobei in Fig. 1 nur die Sende- und Empfangsvorrichtung 1 einer einzelnen Zelle dargestellt ist. Die Aussendung der Sendeblöcke (Bursts) erfolgt in einem festen TDMA-Zeitrahmen. Es ist deshalb notwendig, nicht nur die Aussendung der Sendeblöcke durch die Sendeeinrichtungen 6a - 6c zeitlich zu synchronisieren, sondern auch die Empfangseinrichtungen 8a - 8c zu synchronisieren, so daß von den Empfangseinrichtungen 8a - 8c geprüft werden kann, ob die empfangenen Sendeblöcke in ein erlaubtes Zeitfenster fallen, das durch die maximale Ausbreitungsverzögerung von einem sich am Zellenrand befindlichen Flugzeug vorgegeben ist. Signale von Flugzeugen außerhalb der Zelle können so ausgeblendet werden (Squelch-Window- oder Validity-Window-Funktion). Die Synchronisierung der Empfangseinrichtungen 8a - 8c könnte grundsätzlich durch einen zusätzlichen Zeitnormalempfänger erfolgen, der am Standort der Empfangseinrichtungen 8a - 8c angeordnet wäre. Dies wäre jedoch eine relativ kostenintensive Lösung. Erfindungsgemäß wird deshalb vorgeschlagen, die Synchronisation der Empfangseinrichtungen 8a - 8c durch Mithören des Sendesignals der Sendeeinrichtungen 6a - 6c vorzunehmen.

Fig. 2 zeigt ein detaillierteres Blockschaltbild einer Empfangseinrichtung 8a. Die Antenne 20 der Empfangseinrichtung 8a ist mit einem digitalen Signalprozessor (DSP-Rx) 21 verbunden. In dem digitalen Signalprozessor 21 erfolgt die Demodulation der Daten. Die Daten werden über einen SSI-Datenbus 22 einem Verbindungs-Prozessor (Link Processor LP-Rx) übergeben. In dem Verbindungs-Prozessor 23 erfolgt eine Decodierung, insbesondere Golay-Decodierung, ein Discrambling sowie eine Auswertung einer sogenannten Systeminformation, auf die später noch eingegangen wird. Dazu ist der Verbindungs-Prozessor 23 mit einem Zeitsteuer-Prozessor FPGA 26 verbunden, dessen erste Zeitsteuereinrichtung (timer) 28 mit einem Synchronisationssignal TOA über eine Leitung 36 versorgt wird. In dem in Fig. 2 dargestellten, bevorzugten Ausführungsbeispiel arbeitet die erste Zeitsteuereinrichtung (timer) 28 als Hintergrund-Zeitsteuerung (background timer) und steht über eine Steuerleitung 30 mit dem Verbindungsprozessor 23 in Verbindung. Zusätzlich ist eine zweite Zeitsteuereinrichtung (timer) 25 bei dem bevorzugten Ausführungsbeispiel vorgesehen, die als Vordergrund-Zeitsteuerung (forground timer) arbeitet und über eine Zeitübernahmesteuerung 24 mit der ersten Zeitsteuereinrichtung 28 verbunden ist. Über eine Steuerleitung 27 steht die zweite Zeitsteuereinrichtung 25 mit dem Verbindungsprozessor 23 in Verbindung.

Die Zeitsteuereinrichtungen 25, 28 empfangen Taktsignale von einem Taktgenerator 31, der im dargestellten Ausführungsbeispiel mit einem Heizelement aktiv temperaturkompensiert ist (OXCO = oven controlled constant oscillator).

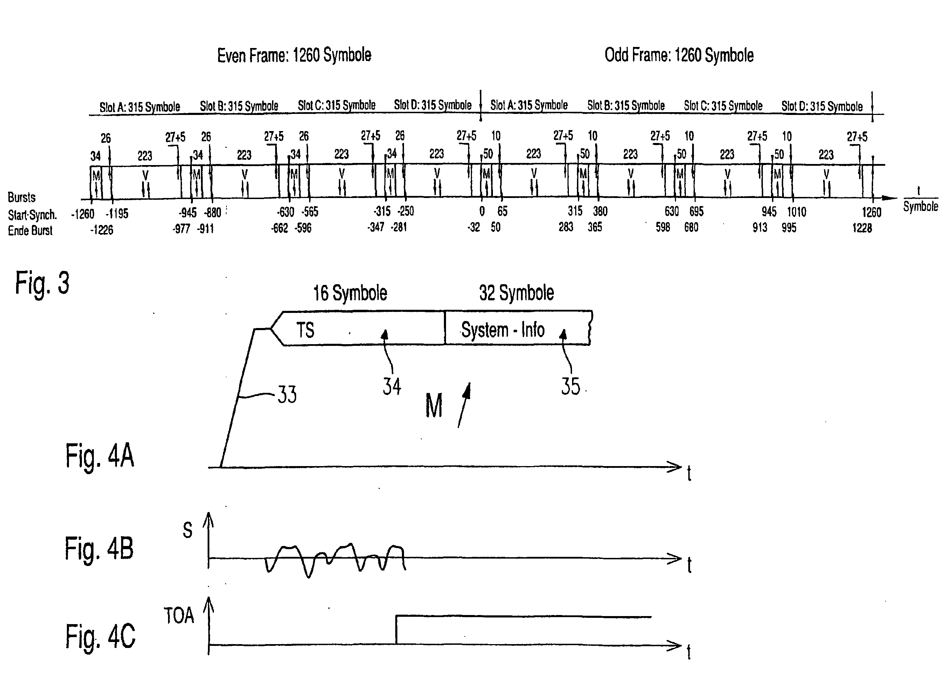

Bevor auf die erfindungsgemäße Funktionsweise näher eingegangen wird, soll zunächst anhand von Fig. 3 die Block-Struktur der VDL-Signale kurz erläutert werden. Fig. 3 zeigt die Sendeblöcke (bursts), die üblicherweise beim VDL-Flugfunk verwendet werden, als Funktion der Zeit t, wobei die Zeitachse mit der Anzahl der übertragenen Datensymbole skaliert ist. Datenrahmen (frames) zu je 1260 Symbolen gliedern sich in vier sogenannte Management-Bursts M (Management-Datenblöcke) und vier Daten-Bursts V. Der für jeden Sendeblock (burst) angegebene Pfeil kennzeichnet die Übertragungsrichtung. Ein Pfeil nach oben bedeutet eine Übertragung von der Bodenstation zu der sich im Flugzeug befindlichen Station. Umgekehrt bedeutet ein nach unten gerichteter Pfeil eine Übertragung von der Station im Flugzeug zu der in Fig. 1 dargestellten Bodenstation. Die Daten-Bursts V können je nach Situation in beide Richtungen übertragen werden. Die nachfolgend beschriebene Synchronisation der Zeitsteuerung 25 durch Mithören des Sendesignals erfolgt anhand der von der Sendeeinrichtung 6a ausgesandten Management-Bursts (M). Die Aussendung dieser von der Bodenstation zu den Flugzeugen ausgesandten Management-Bursts (M) erfolgt in einem TDMA-Zeitrahmen zu exakt festgelegten Zeiten, die durch den Zeitnormalempfänger 7 synchronisiert werden. Der Zeitpunkt der Aussendung dieser Management-Bursts (M) kann deshalb zur Synchronisation des Zeitsteuer-Prozessors 26 der sich in räumlicher Entfernung befindlichen Sendeeinrichtung 8a - 8c verwendet werden. Hierzu ist es allerdings notwendig, die von der Bodenstation an die Flugzeuge ausgesandten Management-Bursts (M mit nach oben gerichteten Pfeil in Fig. 3) von den von den Sendeempfängern der Flugzeuge ausgesandten Management-Bursts (M mit nach unten gerichtetem Pfeil in Fig. 3) zu unterscheiden. Die vorliegende Erfindung benutzt hierzu eine Kombination von Identifikations-Merkmalen, die nachfolgend näher erläutert werden.

Fig. 4A zeigt die Datenstruktur der Management-Bursts (Management-Sendeblöcke) als Funktion der Zeit t. Gefolgt von der nur schematisch dargestellten ansteigenden Rampe 23 des Management-Bursts M wird von der Sendeeinrichtung 6a eine sogenannte Trainingssequenz TS 34 ausgesandt. Hierbei wird eine ganz bestimmte Trainingssequenz S₂* von insgesamt vier möglichen Trainingssequenzen S₁, S₂, S₁* und S₂* von der Bodenstation benutzt. Das Kriterium dieser bestimmten Trainingssequenz TS = S₂* ist jedoch noch nicht eindeutig, da in bestimmten Betriebssituationen (einloggen, poll response und net entry) diese Trainingssequenz S₂* von den in den Flugzeugen befindlichen mobilen Sendeempfängern ebenfalls benutzt wird. Es ist deshalb notwendig, dieses Kriterium der bestimmten Trainingssequenz S₂* mit einem weiteren Kriterium zu verbinden. Entsprechend der erfindungsgemäßen Lösung wird die der aus 16 Symbolen bestehenden Trainingssequenz nachfolgende Systeminformation "System-Info" 35, die aus 32 Symbolen besteht, für dieses zusätzliche Kriterium benutzt. Diese "System-Info" ist in Fig. 4A ebenfalls veranschaulicht. In Fig. 4B ist das Sendesignal S als Funktion der Zeit t schematisch dargestellt. Sobald die bestimmte Trainingssequenz S₂* erkannt wird, ändert sich der Zustand eines Synchronisationssignals TOA, das, wie in Fig. 2 dargestellt, über eine Steuerleitung 36 der ersten Zeitsteuereinrichtung 28 zugeführt wird.

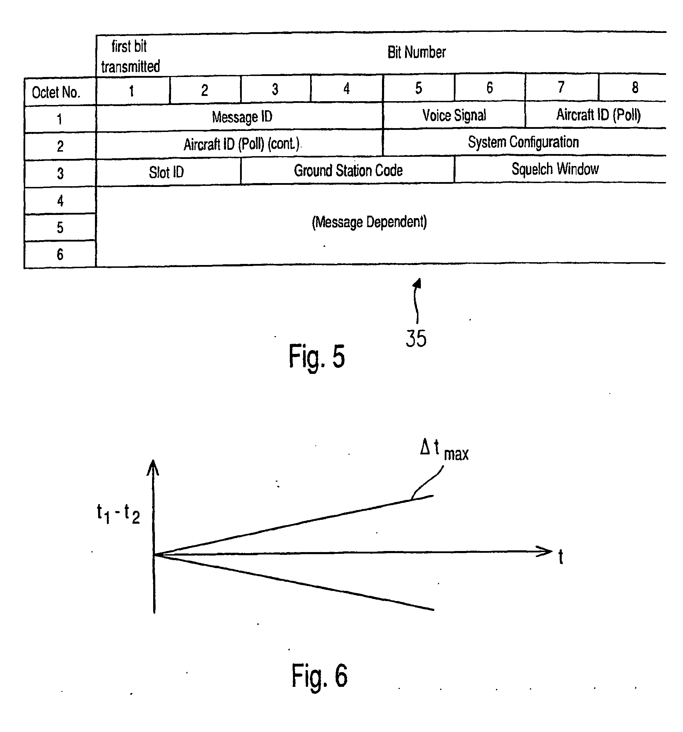

Fig. 5 zeigt die Datenstruktur der Systeminformation 35. Erkennbar ist, daß zunächst eine sogenannte Message ID ausgesandt wird, der ein Voice Signal, eine Aircraft ID, eine System Configuration, eine Slot ID, ein Ground Station Code, ein Squelch Window und eine benutzungsabhängige Information (message dependent) folgt. Erfindungsgemäß wird vorgeschlagen, bestimmte Bits dieser Systeminformation 35 zur eindeutigem Identifizierung eines von der Bodenstation ausgesandten Management-Burst zu verwenden. Besonders bevorzugt kann die zu Beginn der Systeminformation 35 ausgesandte "Message ID" verwendet werden, da das erste Bit dieser "Message ID" bei einem von der Bodenstation, also einer der Sendeeinrichtungen 6a,6b oder 6c ausgesandten Management-Burst 0 ist, während ein von einer mobilen, in einem Flugzeug befindlichen Sendeeinrichtung ausgesandter Management-Burst eine "Message ID" hat, deren erstes Bit 1 ist.

Eine andere oder zusätzliche Möglichkeit besteht darin, den nur von den Bodenstationen verwendeten Ground Station Code zu indentifizieren. Die Indentifikation dieses Ground Station Code bietet zusätzlich den Vorteil, daß ein aufgrund von Überreichweiten empfangener Management-Bursts von einer Bodenstation einer anderen Zelle des zellulären Funksystems ausgeschlossen werden kann, da die Sendeeinrichtungen 6a - 6c unterschiedliche Zellen unterschiedliche Ground Station Codes aussenden.

Eine andere oder zusätzliche Möglichkeit des Ausschluß von Management-Bursts, die von Bodenstationen anderer Zellen ausgesandt werden, besteht in einer Überprüfung der Feldstärke. Der digitale Signalprozessor 21 überträgt hierzu an den Verbindungsprozessor 23 ein digitales Kontrollsignal RSSI, das dieser Feldstärke entspricht. Nur wenn die Feldstärke einen vorbestimmten Minimal-Wert überschreitet, wird der empfangene Management-Burst für die Zeitsynchronisation herangezogen. Eine weitere Möglichkeit besteht darin, die Fehlerrate bei der Decodierung heranzuziehen. Der Verbindungs-Prozessor 23 nimmt eine Decodierung, vorzugsweise eine Golay-Decodierung, des empfangenen Signals vor. Dabei wird die Fehlerrate FEC erfaßt. Nur wenn die Fehlerrate einen vorbestimmten Maximalwert unterschreitet, kann davon ausgegangen werden, daß der Empfang des Signals einwandfrei ist und insbesondere nicht ein Management-Burst der Bodenstation einer benachbarten Zelle empfangen wurde, der entsprechend gestört ist und deshalb eine höhere Fehlerrate hat. Bei einem bevorzugten Ausführungsbeispiel wird nur ein fehlerfreies Signal akzeptiert. Vorzugsweise werden die Kriterien Trainingssequenz S₂*, erstes Bit der Message ID = 0, Feldstärke - Signal RSSI übersteigt einen vorgegebenen Minimalwert und Fehlerrate FEC unterschreitet einen vorbestimmten Wert kombiniert herangezogen und ggf. noch mit dem zusätzlichen Kriterium des richtigen Ground Station Code verknüpft.

Bei dem Ausführungsbeispiel wird in dem digitalen Signalprozessor 21 ermittelt, ob die bestimmte Trainingssequenz S₂* von dem mitgehörten Management-Burst (Sendeblock) M übertragen wird. Sofern dies der Fall ist, wird über die Steuerleitung 36 das Synchronisationssignal TOA an die erste Zeitsteuereinrichtung 28 übertragen. Die erste Zeiteinrichtung wird aufgrund des empfangenen Synchronisationssignals TOA gestartet. Stellt der Verbindungs-Prozessor 23 zusätzlich noch fest, daß das erste Bit der Message ID 0 ist, so entscheidet der Verbindungs-Prozessor 23, daß ein von der Boden-Station ausgesandtes Management-Burst M vorliegt und synchronisiert auf diesen Management-Burst M, indem die Zeitübernahmesteuerung 24 den Befehl erhält, die Zeit t₁ (bzw. den Zählwert) der ersten Zeitsteuereinrichtung 28 in die zweite Zeitsteuereinrichtung 25 zu übernehmen. Ggf. werden die Zusatzkriterien der Feldstärke, der Fehlerrate und des Ground Station Code ebenfalls herangezogen.

Während die zweite Zeitsteuereinrichtung 25 die Zeitsteuerung des Verbindungsprozessors 23 übernimmt, befindet sich die erste Zeitsteuerung 28 im Hintergrund. Wird eine gültige Trainsingssequenz S₂* empfangen, so wird zunächst nur diese Hintergrund-Zeitsteuereinrichtung 28 durch das Synchronisationssignal TOA neu gestartet.

Der Verbindungsprozessor 23 überprüft, z. B. durch Auswerten der Message ID, ob ein gültiger Management-Burst vorliegt. Nur dann wird die Zeit t₁ der ersten Zeitsteuereinrichtung 28 in die zweite Zeitsteuereinrichtung 25 übernommen. Vor der Übernahme in die zweite Zeitsteuereinrichtung 25 können weitere entsprechend den vorstehend beschriebenen Kriterien gültige Management-Bursts M ausgewertet werden. Ergibt sich, daß die Synchronisation auf diese gültigen Management-Bursts M jeweils zu der gleichen Zeit für die Hintergrund-Zeitsteuereinrichtung 28 führt und die Synchronisation auf die Management-Bursts M somit stabil ist, so wird die Zeit der als Hintergrund-Zeitsteuereinrichtung arbeitenden erste Zeitsteuereinrichtung 28 in die als Vordergrund-Zeitsteuerung arbeitende zweite Zeitsteuereinrichtung 25 übernommen.

Fig. 6 zeigt ein Diagramm, bei welchem der Zeitunterschied zwischen der Zeit t₂ der zweiten Zeitsteuereinrichtung 25 und der Zeit t₁ der ersten Zeitsteuereinrichtung 28 als Funktion der Zeit t seit der letzten Übernahme aus der ersten Zeitsteuereinrichtung 28 dargestellt ist. Dabei kann als Kriterium für die Übernahme der Zeit t₁ aus der Hintergrund-Zeitsteuereinrichtung 28 in die Vordergrund-Zeitsteuereinrichtung 25 dieser Zeitunterschied t₁-t₂ zwischen der aktuellen Zeit t₂ in der Vordergrund-Zeitsteuereinrichtung 25 zu der zu übernehmenden Zeit t₁ der Hintergrund-Zeitsteuereinrichtung 28 herangezogen werden. Die Zeit t₁ der ersten Zeitsteuereinrichtung 28 wird dabei in die erste Zeitsteuereinrichtung 25 nur dann übernommen, wenn die Zeitdifferenz t₁-t₂ zwischen der aktuellen Zeit t₂ in der zweiten Zeitsteuereinrichtung 25 und der zu übernehmenden Zeit t₁ in der ersten Zeitsteuereinrichtung 28 kleiner als ein maximaler Zeitunterschied Δtₘₐₓ ist. Dieser maximaler Zeitunterschied wächst in Abhängigkeit von der Zeit t, die seit der letzten Übernahme von der ersten Zeitsteuereinrichtung 28 in die zweite Zeitsteuereinrichtung 25 vergangen ist, beispielsweise linear an.

Die Zeitdifferenz t₁ - t₂ kann ferner dazu verwendet werden, den Taktgenerator 31 so nachzuziehen, daß die Zeitdifferenz t₁-t₂ möglichst minimal wird. Dazu kann der Taktgenerator 31 als spannungsabhängiger konstanter Oszillator (VXCO = voltage controllable constant oscillator) ausgebildet werden und mit einer Spannungsquelle 29 verbunden werden. Der Verbindungs-Prozessor 23 steuert dann diese Spannungsquelle 29 so an, daß die Taktfrequenz des Taktgenerators 31 so nachgezogen wird, daß die Zeitdifferenz zwischen der Zeit t₁ in der ersten Zeitsteuereinrichtung 25 und der Zeit t₂ in der zweiten Zeitsteuereinrichtung 28 bei jeder Übernahme möglichst minimal ist.

Wenn, wie in Fig. 3 dargestellt, mehrere Management-Bursts M innerhalb eines Datenrahmens zu unterschiedlichen Zeiten und bezüglich unterschiedlicher Kanäle A-D (Slot A, Slot B, Slot C, Slot D) von der Bodenstation zu den mobilen Sendeempfängern der Flugzeuge übertragen werden, so ist für die Synchronisation auf die Empfangszeit dieser Management-Blöcke M natürlich noch die unterschiedliche Sendezeit, die sich aus dem Versatz um jeweils 315 Symbole pro Kanal ergibt, zu berücksichtigen. Durch Auswertung der in Fig. 5 dargestellten Slot ID läßt sich der zu dem jeweiligen Management-Burst M gehörende Kanal (Slot A, Slot B, Slot C, Slot D) erhalten und sich dieser Zeitversatz ausrechnen.

Die Erfindung ist nicht auf das dargestellte Ausführungsbeispiel beschränkt. Die Erfindungsidee des Mithörens des Sendesignals der Sendeeinrichtung der gleichen Zelle zum Zwecke der Synchronisation der Empfangseinrichtung läßt sich bei einer Vielzahl konkreter Ausführungsbeispiele nicht nur im VDL-Flugfunk anwenden.

## Patentansprüche

1. Sende- und Empfangsvorrichtung (1) für ein zelluläres Funknetz mit
zumindest einer Sendeeinrichtung (6a),
zumindest einer sich in einer räumlichen Entfernung von der Sendeeinrichtung (6a) befindlichen Empfangseinrichtung (8a), und
einem mit der Sendeeinrichtung (6a) in Verbindung stehenden Zeitnormalempfänger (7), welcher die Aussendung von Sendeblöcken (M) durch die Sendeeinrichtung (6a) zeitlich steuert,
wobei sich in der Empfangseinrichtung (8a) kein Zeitnormalempfänger befindet, sondern die Empfangseinrichtung (8a) durch Mithören des Sendesignals der sich in einiger räumlicher Entfernung jedoch in der gleichen Zelle befindlichen Sendeeinrichtung (6a) ein Synchronisationssignal (TOA) zur Synchronisation der Zeit (t₁) einer ersten Zeitsteuereinrichtung (28) der Empfangseinrichtung (8a) erzeugt,
**dadurch gekennzeichnet,**
**daß** das Synchronisationssignal (TOA) nur dann erzeugt wird, wenn der zugehörige Sendeblock (M) von einer vorbestimmten Trainingssequenz (34) eingeleitet wird und daß die Zeit (t₁) der ersten Zeitsteuereinrichtung (28) nur dann in eine zweite Zeitsteuereinrichtung (25), welche die Empfangseinrichtung (8a) zeitlich steuert, übernommen wird, wenn zumindest ein Bit einer der Trainingssequenz (34) nachfolgenden Systeminformation (35) einen vorbestimmten Wert annimmt , wobei das Bit die Sendeeinrichtung (6a) identifiziert.

2. Sende- und Empfangsvorrichtung nach Anspruch 1,
**dadurch gekennzeichnet,**
**daß** die Empfangseinrichtung (8a) einen Signalprozessor (21), welcher feststellt, ob die vorbestimmte Trainingssequenz (34) übertragen wurde, und einen dem Signalprozessor (21) nachgeschalteten Verbindungs-Prozessor (23), welcher feststellt, ob die Systeminformation (35) den vorbestimmten Wert annimmt, aufweist.

3. Sende- und Empfangsvorrichtung nach Anspruch 2,
**dadurch gekennzeichnet,**
**daß** der Signalprozessor (21) an die erste Zeitsteuereinrichtung (28) das Synchronisationssignal (TOA) übermittelt, wenn der Signalprozessor (21) feststellt, daß die vorbestimmte Trainingssequenz (34) übertragen wurde.

4. Sende- und Empfangsvorrichtung nach einem der Ansprüche 1 bis 3,
**dadurch gekennzeichnet,**
**daß** die Zeit (t₁) der ersten Zeitsteuereinrichtung (28) nur dann in die zweite Zeitsteuereinrichtung (25) übernommen wird, wenn die Feldstärke des mitgehörten Sendesignals einen vorbestimmten Minimalwert überschreitet.

5. Sende- und Empfangsvorrichtung nach einem der Ansprüche 1 bis 4,
**dadurch gekennzeichnet,**
**daß** die Zeit (t₁) der ersten Zeitsteuereinrichtung (28) nur dann in die zweite Zeitsteuereinrichtung (25) übernommen wird, wenn die Fehlerrate des mitgehörten Sendesignals einen vorbestimmten Maximalwert unterschreitet.

6. Sende- und Empfangsvorrichtung nach einem der Ansprüche 1 bis 5,
**dadurch gekennzeichnet,**
**daß** die Zeit (t₁) der ersten Zeitsteuereinrichtung (28) nur dann in die zweite Zeitsteuereinrichtung (25) übernommen wird, wenn die Zeit (t₁) der ersten Zeitsteuereinrichtung (28) um weniger als einen maximalen Zeitunterschied (Δtₘₐₓ) von der Zeit (t₂) in der zweiten Zeitsteuereinrichtung (25) abweicht.

7. Sende- und Empfangsvorrichtung nach Anspruch 6,
**dadurch gekennzeichnet,**
**daß** der maximale Zeitunterschied (Δtₘₐₓ) in Abhängigkeit von der Zeit (t), die seit der letzten Übernahme von der ersten Zeitsteuereinrichtung (28) in die zweite Zeitsteuereinrichtung (25) vergangen ist, ansteigt.

8. Sende- und Empfangsvorrichtung nach einem der Ansprüche 1 bis 7,
**dadurch gekennzeichnet,**
**daß** zwischen der ersten Zeitsteuereinrichtung (28) und der zweiten Zeitsteuereinrichtung (25) eine Zeitübernahmesteuerung (24) angeordnet ist, die die Zeit (t₁) der ersten Zeitsteuereinrichtung (25) in die zweite Zeitsteuereinrichtung (28) überträgt.

9. Verfahren zur Synchronisation einer Sende- und Empfangsvorrichtung nach einem der Ansprüche 1 bis 8 mit einer Empfangseinrichtung (8a), die Teil eines zellulären Funknetzes ist, durch Mithören eines aus mehreren Sendeblöcken (M) bestehenden Sendesignals einer zur gleichen Zelle gehörenden Sendeeinrichtung (6a),
**dadurch gekennzeichnet,**
**daß** das Synchronisationssignal (TOA) zur Synchronisation der ersten Zeitsteuereinrichtung (28) erzeugt wird, wenn ein Sendeblock (M) von einer vorbestimmten Trainingssequenz (34) eingeleitet wird und die Zeit (t₁) der ersten Zeitsteuereinrichtung (28) in eine zweite Zeitsteuereinrichtung (25) übernommen wird, wenn zumindest ein Bit einer der Trainingssequenz nachfolgenden Systeminformation (35) einen vorbestimmten Wert annimmt, wobei das bit die Sendeeinrichtung (6a) identifiziert.

10. Verfahren nach Anspruch 9,
**dadurch gekennzeichnet,**
**daß** die Zeit (t₁) der ersten Zeitsteuereinrichtung (28) nur dann in die zweite Zeitsteuereinrichtung (25) übernommen wird, wenn die Feldstärke des mitgehörten Sendesignals einen vorbestimmten Minimalwert überschreitet.

11. Verfahren nach Anspruch 9 oder 10,
**dadurch gekennzeichnet,**
**daß** die Zeit (t₁) der ersten Zeitsteuereinrichtungen (28) nur dann in die zweite Zeitsteuereinrichtung (25) übernommen wird, wenn die Fehlerrate des mitgehörten Sendesignals einen vorbestimmten Maximalwert unterschreitet.

## Claims

1. Transmitter and receiver device (1) for a cellular radio network having
at least one transmitter installation (6a)
at least one receiver installation (8a) located a physical distance away from the transmitter installation (6a), and
a time-standard receiver (7) connected to the transmitter installation (6a), that controls the timing of the transmission of transmission bursts (M) by the transmitter installation (6a),
wherein there is no time-standard receiver at the receiver installation (8a) and instead, by listening in on the transmission signal from the transmitter installation (6a), which is located a physical distance away but in the same cell, the receiver installation (8a) generates a synchronizing signal (TOA) for synchronizing the time (t₁) at a first timer (28) in the receiver installation (8a),
**characterized in that**
the synchronizing signal (TOA) is only generated when the associated transmission burst (M) is introduced by a predetermined training sequence (34) and **in that**
the time (t₁) at the first timer (28) is only transferred to a second timer (25) that controls the timing of the transmitter installation (8a) if at least one bit of a set of system information (35) following the training sequence (34) is of a predetermined value, the said bit identifying the transmitter installation (6a).

2. Transmitter and receiver device according to claim 1,
**characterized in that**
the receiver installation (8a) has a signal processor (21) that finds whether the predetermined training sequence (34) has been transmitted, and a link processor (23) connected downstream of the signal processor (21) that finds whether the system information (35) is of the predetermined value.

3. Transmitter and receiver device according to claim 2,
**characterized in that**
the signal processor (21) transmits the synchronizing signal (TOA) to the first timer (28) if the signal processor (21) finds that the predetermined training sequence (34) has been transmitted.

4. Transmitter and receiver device according to one of claims 1 to 3,
**characterized in that**
the time (t₁) at the first timer (28) is only transferred to the second timer (25) if the field strength of the transmission signal that is listened in on exceeds a predetermined minimum value.

5. Transmitter and receiver device according to one of claims 1 to 4,
**characterized in that**
the time (t₁) at the first timer (28) is only transferred to the second timer (25) if the error rate of the transmission signal that is listened in on is lower than a predetermined maximum value.

6. Transmitter and receiver device according to one of claims 1 to 5,
**characterized in that**
the time (t₁) at the first timer (28) is only transferred to the second timer (25) if the time (t₁) at the first timer (28) differs from the time (t₂) at the second timer (25) by less than a maximum difference in time (Δtₘₐₓ).

7. Transmitter and receiver device according to claim 6,
**characterized in that**
the maximum difference in time (Δtₘₐₓ) increases as a function of the time (t) that has elapsed since the last transfer from the first timer (28) to the second timer (25).

8. Transmitter and receiver device according to one of claims 1 to 7,
**characterized in that**
arranged between the first timer (28) and the second timer (25) is a time-transfer controller (24) that transmits the time (t₁) at the first timer (25) to the second timer (28).

9. Method for synchronizing a transmitter and receiver device according to one of claims 1 to 8 having a receiver installation (8a) that is part of a cellular radio network by listening in on a transmission signal comprising a plurality of transmission bursts (M) from a transmitter installation (6a) belonging to the same cell,
**characterized in that**
the synchronizing signal (TOA) for synchronizing the first timer (28) is generated if a transmission burst (M) is introduced by a predetermined training sequence (34) and the time (t₁) at the first timer (28) is transferred to a second timer (25) if at least one bit of a set of system information (35) following the training sequence is of a predetermined value, the said bit identifying the transmitter installation (6a).

10. Method according to claim 9,
**characterized in that**
the time (t₁) at the first timer (28) is only transferred to the second timer (25) if the field strength of the transmission signal listened in on exceeds a predetermined minimum value.

11. Method according to claim 9 or 10,
**characterized in that**
the time (t₁) at the first timer (28) is only transferred to the second timer (25) if the error rate of the transmission signal listened in on is less than a predetermined maximum value.

## Revendications

1. Dispositif d'émission et de réception (1) pour un réseau radio cellulaire, avec
au moins un dispositif d'émission (6a),
au moins un dispositif de réception (8a) qui se trouve à une distance spatiale du dispositif d'émission (6a), et
un récepteur de l'heure normale (7) se trouvant en communication avec le dispositif d'émission (6a), qui commande dans le temps l'émission de blocs d'émission (M) par le dispositif d'émission (6a),
sachant qu'il ne se trouve pas de récepteur de l'heure normale dans le dispositif de réception (8a), mais que le dispositif de réception (8a) engendre, par écoute simultanée du signal d'émission du dispositif d'émission (6a) qui se trouve à une certaine distance spatiale mais dans la même cellule, un signal de synchronisation (TOA) pour la synchronisation du temps (t₁) d'un premier dispositif de commande de temps (28) du dispositif de réception (8a),
**caractérisé en ce que**
le signal de synchronisation (TOA) n'est engendré que quand le bloc d'émission correspondant (M) est introduit par une séquence d'entraînement (34) prédéfinie et **en ce que** le temps (t₁) du premier dispositif de commande de temps (28) n'est pris en charge dans un deuxième dispositif de commande de temps (25), lequel commande le dispositifs de réception (8a) en fonction du temps, que quand au moins un bit d'une information système (35) suivant la séquence d'entraînement (34) prend une valeur prédéfinie, sachant que le bit identifie le dispositif d'émission (6a).

2. Dispositif d'émission et de réception selon la revendication 1,
**caractérisé en ce que**
le dispositif de réception (8a) comporte un processeur de signaux (21), lequel détermine si la séquence d'entraînement (34) prédéfinie a été transmise, et un processeur de liaison (23) monté en aval du processeur de signaux (21), lequel détermine si l'information système (35) prend la valeur prédéfinie.

3. Dispositif d'émission et de réception selon la revendication 2,
**caractérisé en ce que**
le processeur de signaux (21) transmet le signal de synchronisation (TOA) au premier dispositif de commande de temps (28) quand le processeur de signaux (21) constate que la séquence d'entraînement prédéfinie (34) a été transmise.

4. Dispositif d'émission et de réception selon l'une des revendications 1 à 3,
**caractérisé en ce que**
le temps (t₁) du premier dispositif de commande de temps (28) n'est pris en charge dans le deuxième dispositif de commande de temps (25) que quand l'intensité de champ du signal d'émission écouté simultanément dépasse une valeur minimale prédéfinie.

5. Dispositif d'émission et de réception selon l'une des revendications 1 à 4,
**caractérisé en ce que**
le temps (t₁) du premier dispositif de commande de temps (28) n'est pris en charge dans le deuxième dispositif de commande de temps (25) que quand le taux d'erreur du signal d'émission écouté simultanément dépasse par valeur inférieure une valeur maximale prédéfinie.

6. Dispositif d'émission et de réception selon l'une des revendications 1 à 5,
**caractérisé en ce que**
le temps (t₁) du premier dispositif de commande de temps (28) n'est pris en charge dans le deuxième dispositif de commande de temps (25) que quand le temps du premier dispositif de commande de temps (28) diffère de moins d'une différence de temps maximale (Δtₘₐₓ) du temps (t₂) dans le deuxième dispositif de commande de temps (25).

7. Dispositif d'émission et de réception selon la revendication 6,
**caractérisé en ce que**
la différence de temps maximale (Δtₘₐₓ) augmente en fonction du temps (t) qui s'est écoulé depuis la dernière prise en charge du premier dispositif de commande de temps (28) dans le deuxième dispositif de commande de temps (25).

8. Dispositif d'émission et de réception selon l'une des revendications 1 à 7,
**caractérisé en ce que**
entre le premier dispositif de commande de temps (28) et le deuxième dispositif de commande de temps (25) est disposée une commande de prise en charge du temps (24) qui transmet le temps (t₁) du premier dispositif de commande de temps (25) dans le deuxième dispositif de commande de temps (28).

9. Procédé pour la synchronisation d'un dispositif d'émission et de réception selon l'une des revendications 1 à 8 avec un dispositif de réception (8a) qui fait partie d'un réseau radio cellulaire, par écoute simultanée d'un signal d'émission, consistant en plusieurs blocs d'émission (M), d'un dispositif d'émission (6a) appartenant à la même cellule,
**caractérisé en ce que**
le signal de synchronisation (TOA) est engendré pour la synchronisation du premier dispositif de commande de temps (28) quand un bloc d'émission (M) est introduit par une séquence d'entraînement (34) prédéfinie et **en ce que** le temps (t₁) du premier dispositif de commande de temps (28) est pris en charge dans un deuxième dispositif de commande de temps (25), quand au moins un bit d'une information système (35), qui suit la séquence d'entraînement, prend une valeur prédéfinie, sachant que le bit identifie le dispositif d'émission (6a).

10. Procédé selon la revendication 9,
**caractérisé en ce que**
le temps (t₁) du premier dispositif de commande de temps (28) n'est pris en charge dans le deuxième dispositif de commande de temps (25) que quand l'intensité de champ du signal d'émission écouté simultanément dépasse une valeur minimale prédéfinie.

11. Procédé selon la revendication 9 ou 10,
**caractérisé en ce que**
le temps (t₁) du premier dispositif de commande de temps (28) n'est pris en charge dans le deuxième dispositif de commande de temps (25) que quand le taux d'erreur du signal d'émission écouté simultanément dépasse par valeur inférieure une valeur maximale prédéfinie.
